# EUROPÄISCHE PATENTSCHRIFT

(11) **EP 0 999 101 B1**
(45) Veröffentlichungstag und Bekanntmachung des Hinweises auf die Patenterteilung: **03.12.2003**
(21) Anmeldenummer: 00100300.3
(22) Anmeldetag: 20.09.1996
(51) Int. Cl.: B60R 21/22

(54) **Gassack-Seitenaufprall-Schutzeinrichtung**
Air bag device for lateral impact protection
Dispositif de protection à sac gonflable contre des chocs latéraux

(30) Priorität: 17.10.1995 DE 19538657
(43) Veröffentlichungstag der Anmeldung: 10.05.2000
(62) Teilanmeldung aus: 96115132.1
(73) Patentinhaber: TRW Occupant Restraint Systems GmbH & Co. KG, 73553 Alfdorf (DE)
(72) Erfinder: Acker, Dominique, 73553 Alfdorf (DE); Richter, Thomas, 73529 Schwäbisch Gmünd (DE)
(74) Vertreter: Sties, Jochen, Dipl.-Ing.

(56) Entgegenhaltungen:
- EP-A- 0 565 501
- EP-A- 0 611 684
- WO-A-97/06987
- DE-C- 4 430 412

## Beschreibung

Die Erfindung betrifft eine Gassack-Seitenaufprall-Schutzeinrichtung für Fahrzeuginsassen gemäß dem Oberbegriff des Anspruchs 1.

Aus der DE-C-4 430 412 ist bekannt, einen seitengassack mit einem sich nach ober entfaltenden kopfschutzgassak in einer Fahrzeug für anzuordnen.

Eine eingangs erwähnte Schutzeinrichtung ist aus der EP-A-0 565 501 bekannt. Sie dient dazu, bei einem Seitenaufprall einen Kontakt des Fahrzeuginsassen mit Teilen des Fahrzeugs wie der B-Säule oder der Innenseite der Tür zu verhindern. Der Einbau der Schutzeinrichtung in die Rückenlehne eines Fahrzeugsitzes ist insofern günstig, als die Lage des entfalteten Gassackes relativ zum Fahrzeuginsassen unabhängig von der Position des Sitzes in der Fahrzeuglängsrichtung ist. Jedoch wird der Kopfbereich durch einen solchen Gassack ungenügend geschützt, weil die Entfaltung des Gassacks durch den Sicherheitsgurt behindert wird.

Die Aufgabe der Erfindung besteht darin, eine Seitenaufprall-Schutzeinrichtung der eingangs genannten Art dahingehend zu verbessern, daß ein optimales Entfaltungsverhalten des dem Kopf des Fahrzeuginsassen zugeordneten Gassacks trotz des Vorhandenseins des Sicherheitsgurtes erhalten wird.

Zur Lösung dieser Aufgabe sind bei einer Gassack-Seitenaufprall-Schutzeinrichtung der eingangs genannten Art die Merkmale des Anspruchs 1 vorgesehen. Falls sich also der Sicherheitsgurt im Bereich des Entfaltens des Kopfschutz-Gassackes erstreckt, wird er von dem Kopfschutz-Gassack angehoben. Im Stand der Technik wurde das Aufeinandertreffen zwischen dem Kopfschutz-Gassack und dem Sicherheitsgurt immer als ein Problem betrachtet. Die Anmelderin hat jedoch herausgefunden, daß dieses Aufeinandertreffen keine nachteilige Auswirkung auf den Kopfschutz-Gassack hat, da während eines Seitenaufpralls aufgrund einer Verlagerung des Fahrzeuginsassen relativ zum Fahrzeug eine gewisse Gurtlose entsteht, die ein unbehindertes Entfalten des Kopfschutz-Gassackes ermöglicht. Ein Entfalten des Kopfschutz-Gassackes kann in einer besonders vorteilhaften Weise erzielt werden, wenn der Kopfschutz-Gassack und der Thoraxschutz-Gassack einteilig miteinander ausgebildet sind, wie dies gemäß einer weiteren bevorzugten Ausführungsform vorgesehen ist.

Es ist vorzugsweise vorgesehen, daß der Kopfschutz-Gassack mit der Druckgasquelle über den Thoraxschutz-Gassack verbunden ist. Diese Gestaltung ermöglicht ein besonders einfaches und kompaktes Rückhaltemodul, wobei gleichzeitig das Auftreffen des Oberkörpers eines Fahrzeuginsassen auf dem entsprechenden Gassack dazu herangezogen werden kann, den Kopfschutz-Gassack vollständig zu entfalten.

Weitere vorteilhafte Merkmale der Erfindung sind in den Unteransprüchen angeführt.

Die Erfindung wird nachfolgend unter Bezugnahme auf die beigefügte Zeichnung beschrieben. In dieser zeigen:
- Fig. 1 einen schematischen Längsschnitt einer Gassack-Seitenaufprall-Schutzeinrichtung;
- Fig. 2 einen schematischen Querschnitt durch die Schutzeinrichtung von Fig. 1 entlang der Linie II-II;
- Fig. 3 eine schematische, teilgeschnittene Explosionsansicht der Schutzeinrichtung von Fig. 1;
- Fig. 4 eine schematische Darstellung der Anordnung des Thoraxschutz-Gassackes und des Kopfschutz-Gassackes in jeweils entfaltetem Zustand, wobei diese Ausführungsform nicht zur Erfindung gehört;
- Fig. 5 einen Querschnitt entsprechend dem von Fig. 2 durch die in einer Rückenlehne angebrachte Schutzeinrichtung;
- Fig. 6 einen Längsschnitt entsprechend dem von Fig. 1 durch die in einer Rückenlehne angebrachte Schutzeinrichtung , wobei diese Ausführungsform nicht zur Erfindung gehört;
- Fig. 7 die Schutzeinrichtung von Fig. 6 in einer ersten Zwischenstufe des Entfaltens der beiden Gassäcke;
- Fig. 8 die Schutzeinrichtung von Fig. 6 in einer zweiten Zwischenstufe des Entfaltens der beiden Gassäcke;
- Fig. 9 die Schutzeinrichtung von Fig. 6 mit den beiden Gassäcken in vollständig entfaltetem Zustand;
- Fig. 10 eine der Fig. 4 entsprechende Ansicht einer modifizierten Ausführungsform, wobei diese Ausführungsform nicht zur Erfindung gehört;
- Fig. 11 Ansichten analog der Fig. 6 bis 9 für die modifizierte Ausführungsform, wobei diese Ausführungsform nicht zur Erfindung gehört;
- Fig. 12 eine schematische, teilgeschnittene Ansicht einer Seitenaufprall-Schutzvorrichtung einer erfindungsgemäßen Ausführungsform;
- Fig. 13 einen Querschnitt durch die Schutzvorrichtung von Fig. 12;
- Fig. 14 eine schematische Ansicht der Anordnung des Thoraxschutz-Gassackes und des Kopfschutz-Gassackes von Fig. 12, beide im entfalteten Zustand;
- Fig. 15 eine schematische und perspektivische Ansicht der Anordnung der Thoraxschutz-Gassackes und des Kopfschutz-Gassackes von Fig. 12, beide im entfalteten Zustand;
- Fig. 16 schematisch eine Faltungsart für den Kopfschutz-Gassack und dem Thoraxschutz-Gassack von Fig. 12.

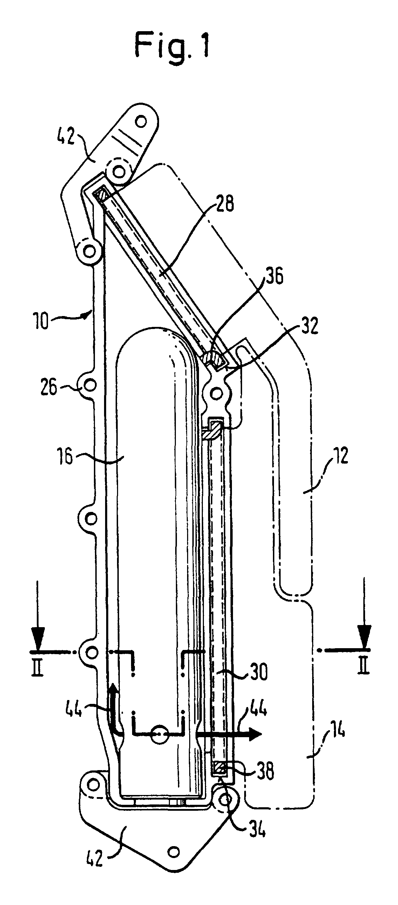

In den Figuren 1 bis 3 ist schematisch eine Gassack-Seitenaufprall-Schutzeinrichtung dargestellt. Diese besteht im wesentlichen aus einem Gehäuse 10, einem Kopfschutz-Gassack 12, einem Thoraxschutz-Gassack 14 und einer Druckgasquelle 16.

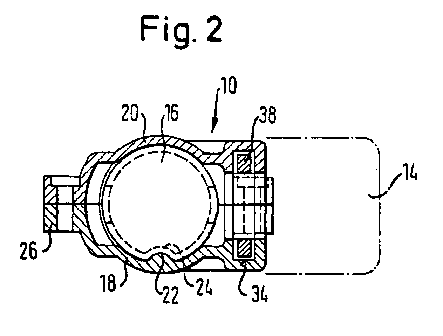

Das Gehäuse 10 ist aus zwei Gehäuseschalen 18, 20 zusammengesetzt, zwischen denen die Druckgasquelle 16 festgelegt ist. Dies geschieht vorzugsweise mittels einer solchen Dimensionierung des Gehäuses relativ zu der Druckgasquelle, daß sich beim Zusammenschrauben der beiden Gehäuseschalen 18, 20 eine geeignete Preßwirkung auf die Druckgasquelle ergibt, so daß diese in dem Gehäuse 10 sicher festgelegt ist. Zusätzlich können zueinander komplementäre Formschlußelemente an dem Gehäuse und der Druckgasquelle verwendet werden, um die Befestigung zu verbessern. Solche Formschlußelemente sind in Fig. 2 unter dem Bezugszeichen 22 für einen in Längsrichtung des Gehäuses auf dessen Innenseite verlaufenden Wulst und unter dem Bezugszeichen 24 für eine entlang der Längsrichtung der Druckgasquelle 16 verlaufenden Rille dargestellt. Die beiden Gehäuseschalen 18, 20 werden miteinander durch Schrauben verbunden, die in Befestigungsaugen 26 eingeschraubt sind.

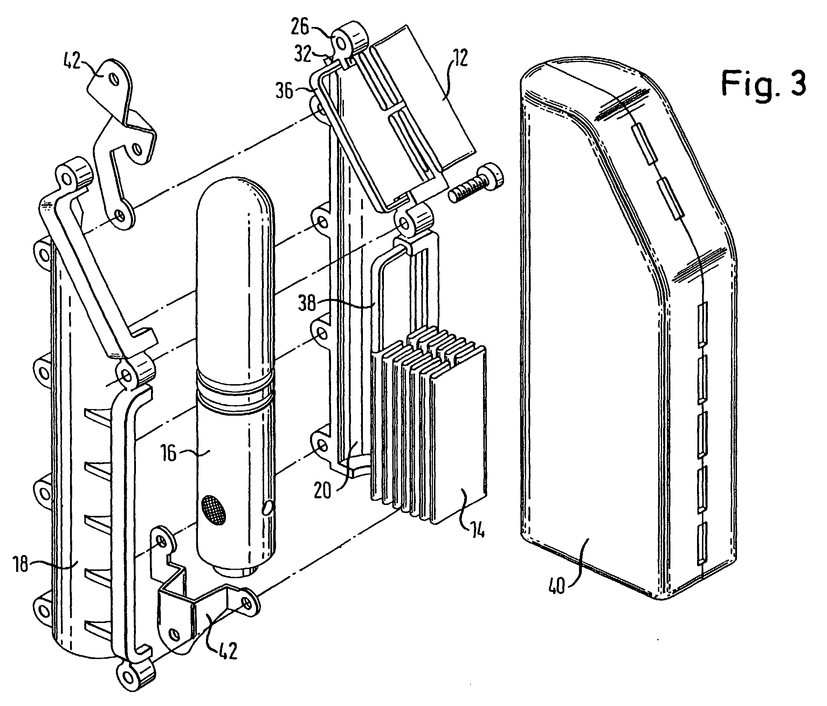

Die beiden Gehäuseschalen 18, 20 sind so gestaltet, daß sie im zusammengesetzten Zustand zwei Anschlußöffnungen für die Gassäcke der Schutzeinrichtung bilden, nämlich eine Anschlußöffnung 28 für den Kopfschutz-Gassack 12 und eine Anschlußöffnung 30 für den Thoraxschutz-Gassack 14. Entlang dem Innenrand jeder Anschlußöffnung ist eine Nut 32 bzw. 34 ausgebildet. In dieser Nut kommt bei miteinander verschraubten Gehäuseschalen 18, 20 ein Befestigungsring 36 bzw. 38 zu liegen, mit dem die Einblasöffnung jedes Gassackes 12 bzw. 14 versehen ist. Auf diese Weise sind der Kopfschutz-Gassack 12 und der Thoraxschutz-Gassack 14 sicher mit dem Gehäuse 10 verbunden. Die beiden Gassäcke sind außerhalb des Gehäuses in geeigneter Weise zusammengefaltet, wobei der zusammengefaltete Kopfschutz-Gassack 12 teilweise auf dem zusammengefalteten Thoraxschutz-Gassack 14 auf dessen von der Druckgasquelle abgewandter Seite zu liegen kommt. Dies ist insbesondere in Fig. 1 zu sehen. Die gefalteten Gassäcke sind schließlich durch eine schematisch in Fig. 3 dargestellte Schutzabdeckung 40 fixiert.

In den Figuren 1 und 3 ist zu sehen, daß an den beiden axialen Enden des Gehäuses jeweils eine getrennt von dem Gehäuse ausgeführte Befestigungslasche 42 vorgesehen ist, welche dafür vorgesehen ist, die Gassack-Seitenaufprall-Schutzeinrichtung mit einer Rückenlehne eines Fahrzeugsitzes zu verbinden, in der sie angebracht werden soll.

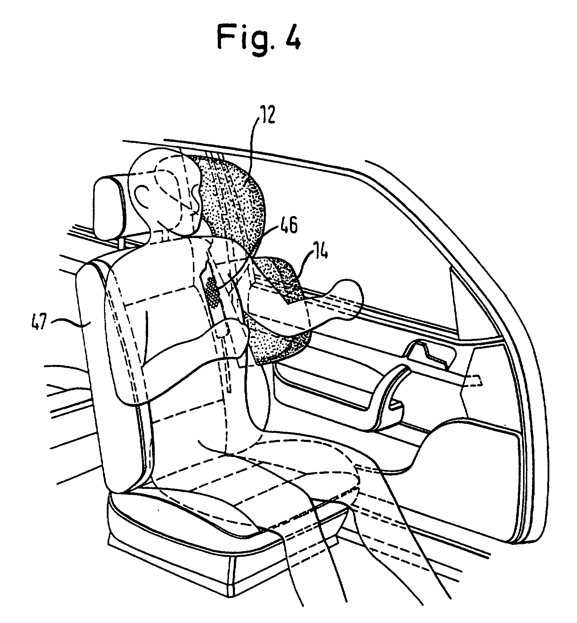

In Fig. 4, die nicht zur Erfindung gehört, ist dargestellt, welche allgemeine Form die beiden Gassäcke 12, 14 im aufgeblasenen Zustand haben, damit für einen Fahrzeuginsassen im Falle eines Seitenaufpralls ein optimaler Schutz bereitgestellt wird. In dieser Figur ist ein Fahrzeuginsasse auf dem Fahrersitz eines Fahrzeugs dargestellt, der vorschriftsmäßig mit einem schematisch dargestellten Sicherheitsgurt 46 angeschnallt ist. Zwischen dem Oberkörper des Fahrzeuginsassen und der Tür erstreckt sich ausgehend von der Rückenlehne 47 des Sitzes der entfaltete Thoraxschutz-Gassack 14. Für einen Schutz auch des Kopfes des Fahrzeuginsassen erstreckt sich ausgehend von der Rückenlehne 47 oberhalb des Thoraxschutz-Gassackes der Kopfschutz-Gassack 12. Damit der Sicherheitsgurt 46 nicht das Entfalten des Kopfschutz-Gassackes 12 behindert, erstreckt sich dieser ausgehend von der Rückenlehne 47 zuerst schräg nach oben und nach vorne und daran anschließend schräg nach oben und nach hinten, so daß der Kopfschutz-Gassack 12 den Sicherheitsgurt allgemein bogenförmig umgreift und teils vor, teils neben dem Kopf des Insassen zu liegen kommt.

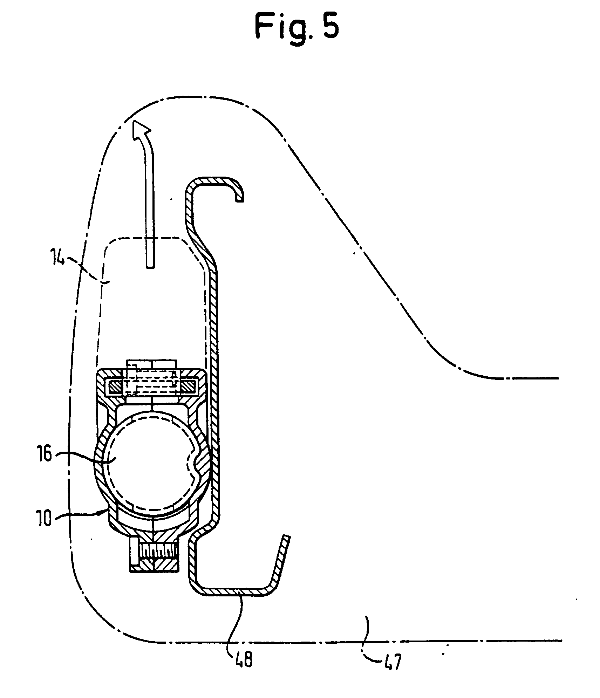

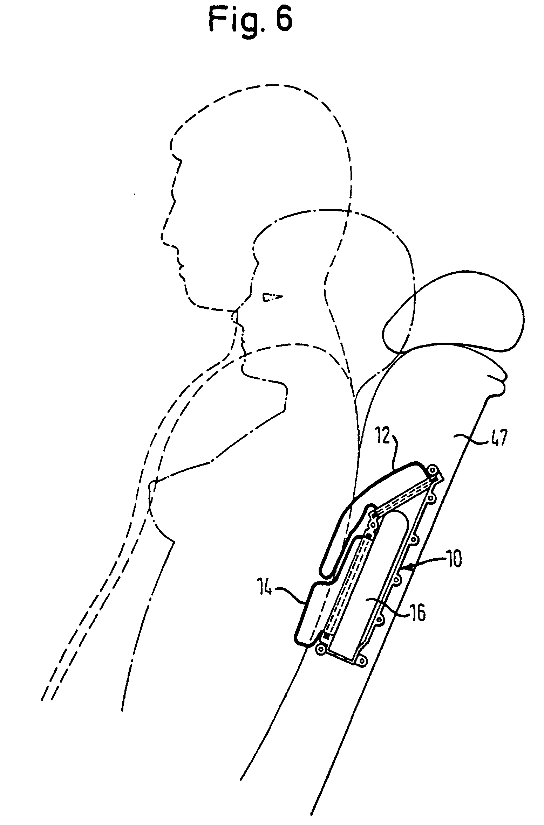

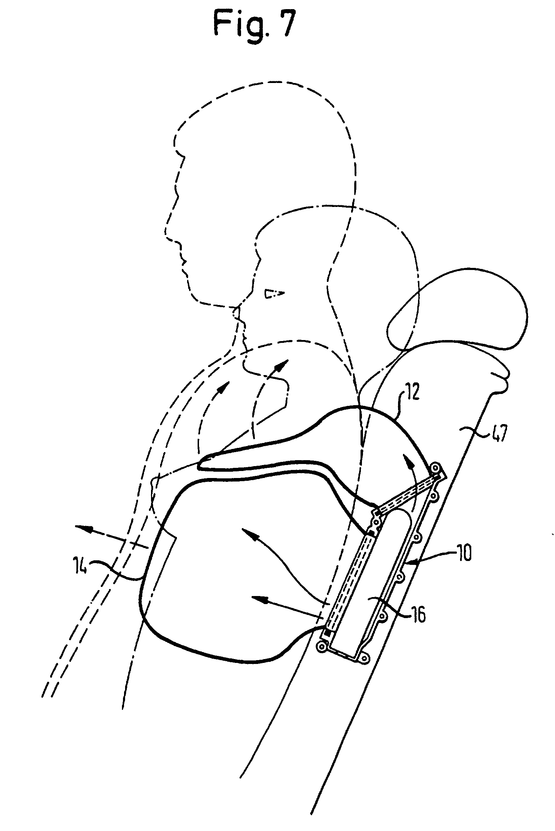

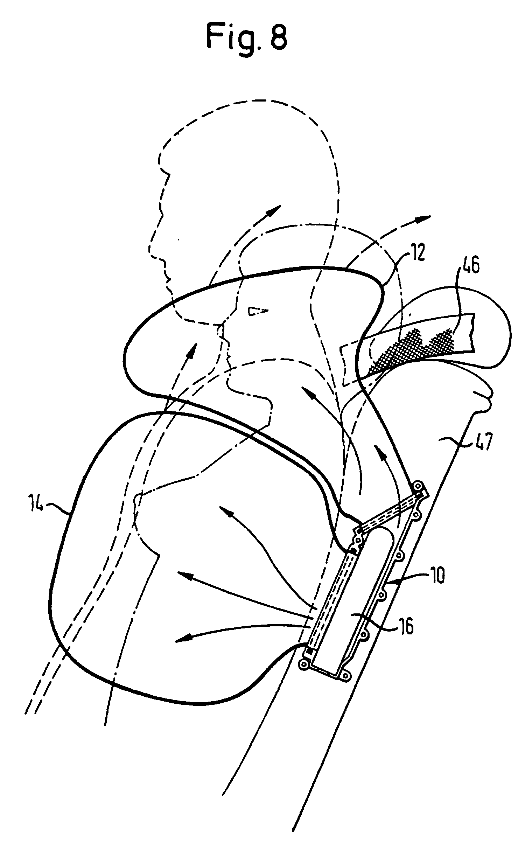

Anhand der Figuren 5 bis 9, die nicht zur Erfindung gehören, wird nachfolgend das Entfalten der beiden Gassäcke erläutert. Dabei wird auf die Auslösesensorik sowie die Druckgasquelle nicht weiter eingegangen, da diese für einen Fachmann auf dem Gebiet der Fahrzeuginsassen-Sicherheitstechnik als bekannt vorausgesetzt werden. In Fig. 5 ist ein Querschnitt durch die Rückenlehne 47 aus Fig. 4 dargestellt. An der linken Seite der Rückenlehne 47 ist das Gehäuse 10 so am Rahmen 48 der Rückenlehne angebracht, daß sich die Längsachse des Gehäuses 10 etwa parallel zur Längsachse der Rückenlehne 47 erstreckt. Somit ist die Anschlußöffnung 30 für den Thoraxschutz-Gassack allgemein nach vorne ausgerichtet, und die Anschlußöffnung 28 für den Kopfschutz-Gassack liegt in einer schräg zur Längsachse der Rückenlehne 47 verlaufenden Ebene. Wenn ausgehend von diesem Zustand die Gassack-Seitenaufprall-Schutzeinrichtung mittels der Auslösesensorik ausgelöst wird, strömt aus der Druckgasquelle 16 unter Druck stehendes Gas in den Innenraum des Gehäuses aus (Pfeile 44 in Fig. 1). Dieses unter Druck stehende Gas strömt aus dem Innenraum des Gehäuses 10 durch die Anschlußöffnungen 28, 30 in die beiden Gassäcke 12, 14, die zu Beginn ihres Entfaltens zuerst die Schutzabdeckung 40 aufreißen. Daran anschließend beginnen sich die beiden Gassäcke 12, 14 zu entfalten. Eine erste Zwischenstufe des Entfaltens dieser Gassäcke ist schematisch in Fig. 7 dargestellt. Darin ist zu sehen, daß sich der Thoraxschutz-Gassack 14 allgemein nach vorne entfaltet, während sich der Kopfschutz-Gassack 12 zuerst nach vorne und schräg nach oben entfaltet. In Fig. 8 ist zu sehen, daß bei fortschreitendem Entfalten der beiden Gassäcke sich der Thoraxschutz-Gassack 14 weiter allgemein nach vorne entfaltet, während sich ab einem gewissen Entfaltungsstadium des Kopfschutz-Gassackes 12 dieser weiter nach oben, nun aber schräg nach hinten entfaltet. Diese Änderung der Entfaltungsrichtung tritt erst dann auf, wenn der Kopfschutz-Gassack 12 ausreichend nach oben entfaltet ist, damit ein Entfalten nach hinten nicht zu einer störenden Wechselwirkung mit dem Sicherheitsgurt 46 führt, und sie wird durch eine Berührung zwischen dem Thoraxschutz-Gassack 14 und dem Kopfschutz-Gassack 12 unterstützt.

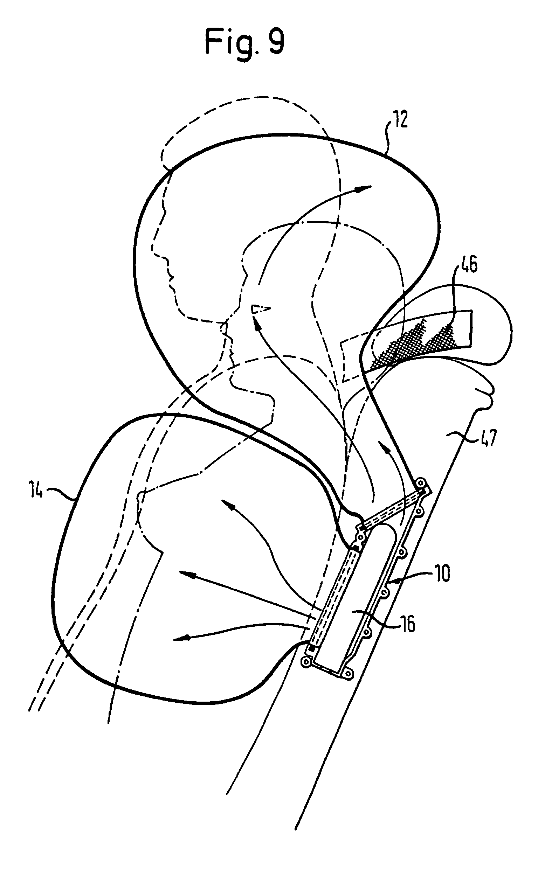

In Fig. 9 sind schließlich die beiden Gassäcke 12, 14 in vollständig entfaltetem Zustand dargestellt. Es ist zu sehen, daß durch die Anordnung des Thoraxschutz-Gassackes 14 und des Kopfschutz-Gassackes 12 bei angelegtem Sicherheitsgurt ein optimaler Schutz für einen Fahrzeuginsassen bei einem Seitenaufprall gewährleistet ist.

Durch diese Gestaltung der Gassack-Seitenaufprall-Schutzeinrichtung ergeben sich eine Reihe von Vorteilen. Zuerst kann durch die Verwendung von zwei getrennten Gassäcken, nämlich einem Kopfschutz-Gassack 12 und einem Thoraxschutz-Gassack 14, die Entfaltungsrichtung des Kopfschutz-Gassackes 12 optimal an den Verlauf des Sicherheitsgurtes 46 angepaßt werden, so daß dieser das Entfalten des Kopfschutz-Gassackes nicht behindert. Die Gestaltung des Kopfschutz-Gassackes 12 und die damit verbundene Einflußnahme auf dessen Entfaltungsrichtung bleiben ohne Rückwirkung auf den Entfaltungsvorgang des Thoraxschutz-Gassackes 14. Durch die Verwendung derselben Druckgasquelle für das Entfalten der beiden Gassäcke wird eine besonders kompakte Schutzeinrichtung geschaffen, die nach Art eines Moduls leicht in verschiedene Rückenlehnen 47 integriert werden kann. Dieses Modul kann leicht an verschiedene Einbausituationen angepaßt werden, da bei unverändertem Gehäuse 10 nur an die jeweilige Rückenlehne angepaßte Befestigungslaschen 42 verwendet werden müssen, die kostengünstig herzustellen sind. Da die beiden Gassäcke 12, 14 über den Innenraum des Gehäuses 10 in einer Strömungsverbindung stehen, kann bei einem Seitenaufprall ein Ausgleich des verdrängten Volumens von einem Gassack zum anderen stattfinden. Die beiden Gehäuseschalen 18, 20 können in fertigungstechnisch günstiger Weise gegossen sein, und die Montage der Schutzeinrichtung geschieht durch ein einfaches Verschrauben der beiden Gehäuseschalen miteinander, zwischen denen alle weiteren Teile der Schutzeinrichtung festgelegt sind. Schließlich kann durch eine geeignete Gestaltung des Innenraums des Gehäuses 10 eine Beeinflussung der Verteilung des aus der Druckgasquelle 16 austretenden Gases zu den beiden Gassäcken 12, 14 vorgenommen werden.

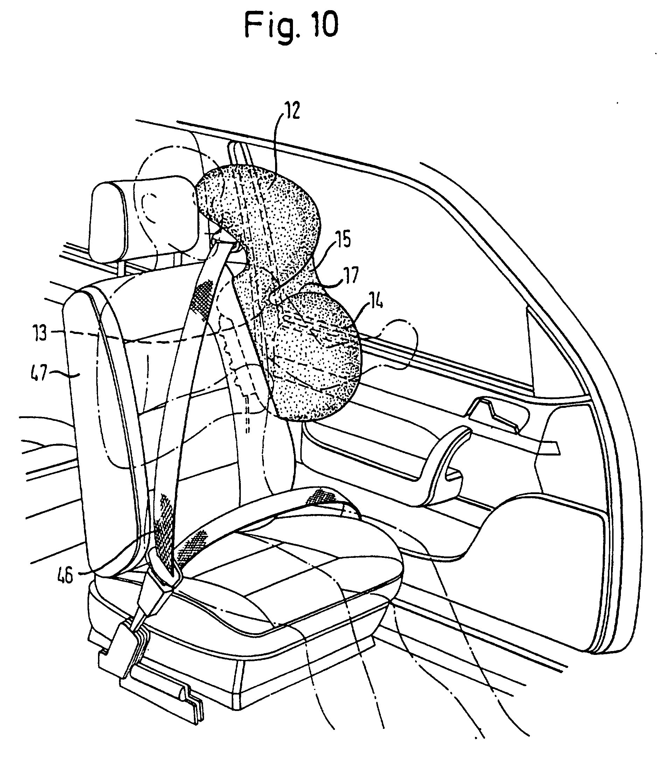

Bei der in Fig. 10 gezeigten Modifikation, die nicht zur Erfindung gehören, sind der Kopfschutz-Gassack 12 und der Thoraxschutz-Gassack 14 durch einen Ausgleichskanal 13 miteinander verbunden. Beide Gassäcke 12, 14 sind einteilig, aus gemeinsamen Textilbahnen hergestellt. Eine die übereinanderliegenden Textilbahnen verbindende Nahtlinie 17 grenzt die Gassäcke 12, 14 voneinander ab und begrenzt zugleich den Ausgleichskanal 13.

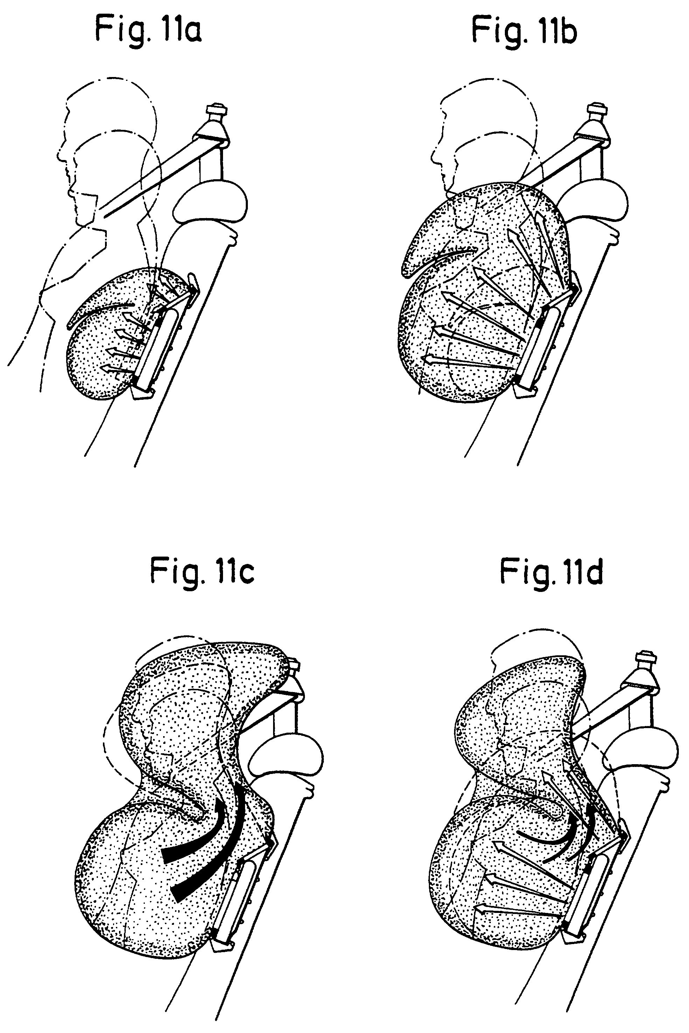

Die Figuren 11a bis 11d, die ebenfalls nicht zur Erfindung gehören, zeigen verschiedene Stufen der Entfaltung beider Gassäcke. In diesen Figuren sind die Strömungs- und Entfaltungsrichtungen durch Pfeile angedeutet. Der in Fig. 11a gezeigte Zustand ist bis etwa 5 ms nach Aktivierung des Gasgenerators erreicht. Fig. 11b zeigt den Zustand bis etwa 10 ms, Fig. 11c bis etwa 15 ms und Fig. 11d bis etwa 20 ms nach Aktivierung des Gasgenerators.

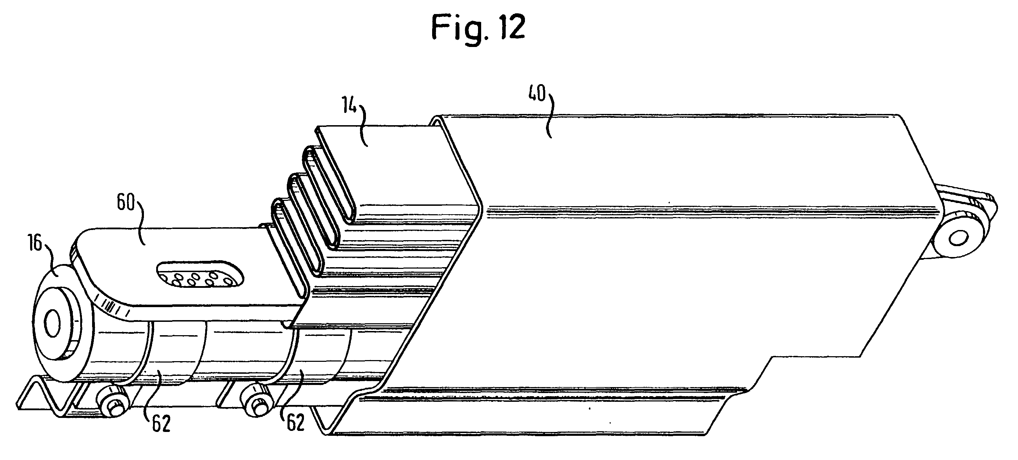

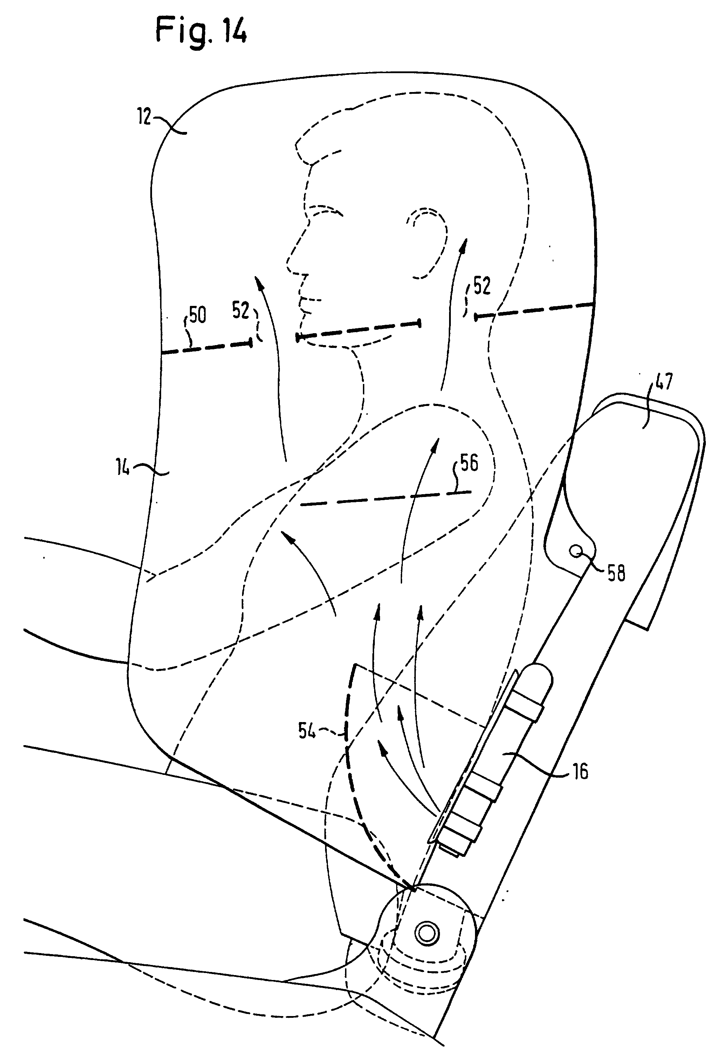

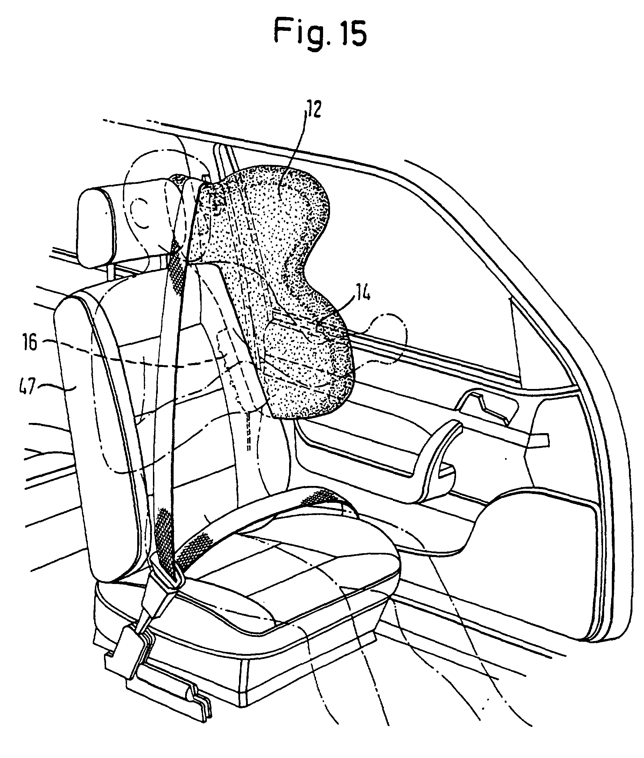

In den Figuren 12 bis 15 ist eine Gassack-Seitenaufprall-Schutzeinrichtung einer erfindungsgemäßen Ausführungsform dargestellt. Um unnötige Wiederholungen zu vermeiden, wird auf die obigen Erläuterungen zur ersten Auführungsform Bezug genommen. Aus dieser Ausführungsform bekannte Elemente werden mit den gleichen Bezugszeichen bezeichnet.

Der wichtigste Unterschied zwischen der obigen Gestaltung und der erfindungsgemäßen Ausführungsform liegt darin, daß bei der erfindungsgemäßen Ausführungsform der Kopfschutz-Gassack 12 und der Thoraxschutz- Gassack 14 einstückig miteinander ausgebildet sind, wobei zwischen den beiden Gassäcken 12, 14 eine Trennwand 50 angeordnet ist. Diese Trennwand ist mit zwei Öffnungen 52 versehen, um eine Strömungsverbindung von der Druckgasquelle 16 über den Thoraxschutz-Gassack 14 zum Kopfschutz-Gassack 12 bereitzustellen.

Der Thoraxschutz-Gassack 14 ist mit einem Gewebeteil 54 versehen, das den Strom von Druckgas, das von der Druckgasquelle 16 freigesetzt ist, nach oben zum Kopfschutz-Gassack 12 leitet. Das Gewebeteil 54 dient außerdem als Schutz für die Wandung des Thoraxschutz-Gassackes 14, da ein direktes Auftreffen des von der Druckgasquelle 16 freigesetzten heißen Gases auf die Wand des Thoraxschutz-Gassackes 14 verhindert wird.

Der Thoraxschutz-Gassack 14 ist außerdem mit einer Raffnaht 56 versehen, mit der die Gestalt des Thoraxschutz-Gassackes 14, wenn dieser entfaltet ist, an die Form der sich neben dem entfalteten Thoraxschutz-Gassack 14 erstreckenden Fahrzeugtür angepaßt werden kann. Oberhalb der Einblasöffnung des Thoraxschutz-Gassackes 14 ist eine Befestigungsstelle 58 vorgesehen, um den Thoraxschutz-Gassack 14 im entfalteten Zustand zu stabilisieren, wobei der Thoraxschutz-Gassack 14 über die Befestigungsstelle 58 mit der Rückenlehne 47 des Fahrzeugsitzes verbunden ist.

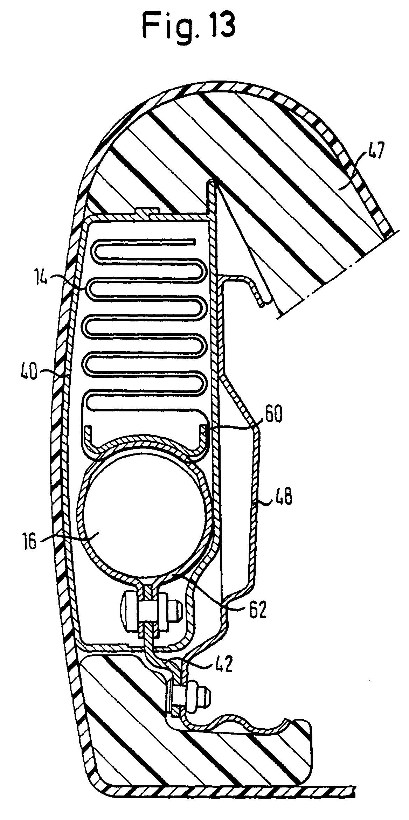

Wie in den Figuren 12 und 13 zu sehen ist, ist das Gehäuse 10 der Gassack-Seitenaufprall-Schutzvorrichtung durch einen Befestigungsstreifen 60 zum Anbringen des Thoraxschutz-Gassackes 14 sowie durch zwei Halteabschnitte 62 gebildet, die mit dem Befestigungsstreifen 60 verbunden sind und an der Druckgasquelle 16 angreifen. Diese Halteabschnitte 62 gehen in Befestigungslaschen 42 über, mit denen das Gehäuse 10 am Rahmen 48 der Rückenlehne 47 des Sitzes befestigt werden kann.

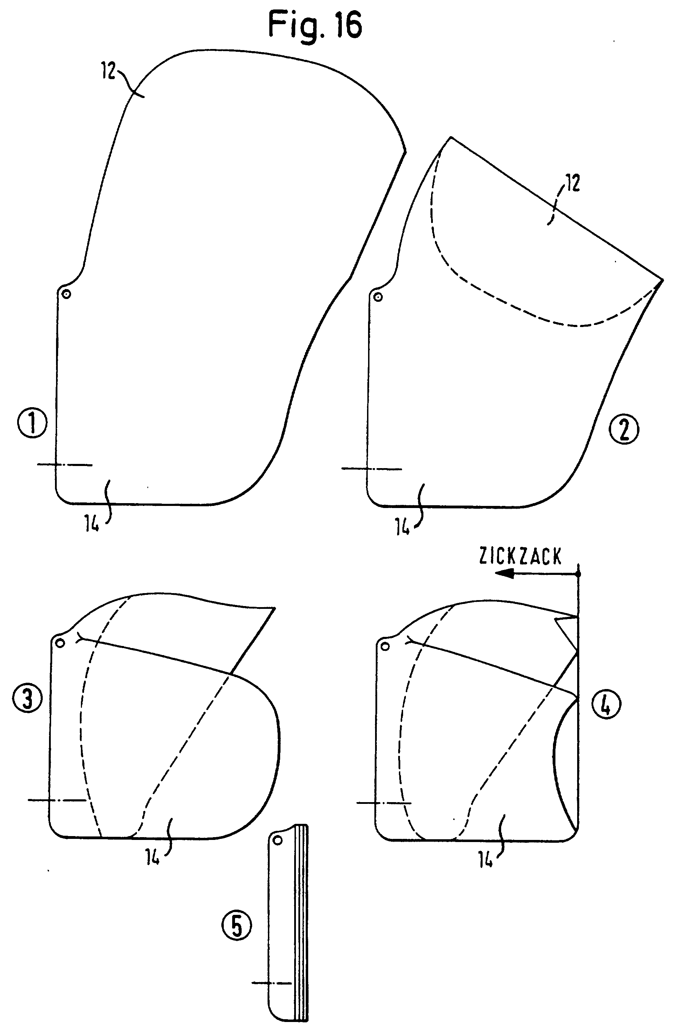

In Fig. 16 ist eine vorteilhafte Weise des Faltens des Kopfschutz-Gassackes 12 und des Thoraxschutz-Gassackes 14 dargestellt, mit welcher gewährleistet werden kann, daß der Kopfschutz-Gassack 12 hauptsächlich nach oben entfaltet wird. Ausgehend von einem Zustand mit flach ausgebreitetem Kopfschutz-Gassack 12 und Thoraxschutz-Gassack 14 (Ansicht 1 von Fig. 16) wird der Kopfschutz-Gassack 12 in das Innere des Thoraxschutz-Gassackes 14 hineingefaltet (Ansichten 2 und 3 von Fig. 16). Anschließend wird der Thoraxschutz-Gassack 14 mit dem in seinem Inneren angeordneten Kopfschutz-Gassack 12 im Zickzack zusammengefaltet (siehe Ansicht 4 von Fig. 16), um die beiden Gassäcke 12, 14 vollständig zusammenzufalten. Wenn die beiden Gassäcke 12, 14 ausgehend von diesem entfalteten Zustand mit Druckgas beaufschlagt werden, das von der Druckgasquelle 16 freigesetzt wird, wird zuerst der Thoraxschutz-Gassack 14 in einem Raum neben der Rückenlehne 47 des Sitzes entfaltet; anschließend wird der Kopfschutz-Gassack 14 nach oben entfaltet, um eine Schutzwirkung für den Kopf des Fahzeuginsassen bereitzustellen. Falls der Kopfschutz-Gassack 12 auf den sich zwischen dem Oberkörper des Fahrzeuginsassen und der B-Säule des Fahrzeugs erstreckenden Sicherheitsgurt trifft, wird dieser, da beim Seitenaufprall eine gewisse Gurtlose entsteht, nach oben angehoben, ohne ein Entfalten des Kopfschutz-Gassackes zu behindern.

## Patentansprüche

1. Gassack-Seitenaufprall-Schutzeinrichtung für Fahrzeuginsassen, die in die Rückenlehne (47) eines Fahrzeugsitzes integriert ist und eine Druckgasquelle (16) sowie einen durch diese aufblasbaren Thoraxschutz-Gassack (14) aufweist, der sich beim Aufblasen in einem Raum seitlich der Rückenlehne (47) entfaltet, wobei ein zusätzlicher Kopfschutz-Gassack (12) vorgesehen ist, **dadurch gekennzeichnet, daß** sich der Kopfschutz-Gassack (12) beim Aufblasen oberhalb des Thoraxschutz-Gassackes (14) und hauptsächlich nach oben entfaltet, so daß er einen Sicherheitsgurt anheben kann.

2. Gassack-Seitenaufprall-Schutzeinrichtung nach Anspruch 1, **dadurch gekennzeichnet, daß** die beiden Gassäcke (12, 14) voneinander unabhängig sind.

3. Gassack-Seitenaufprall-Schutzeinrichtung nach Anspruch 1, **dadurch gekennzeichnet, daß** die beiden Gassäcke (12, 14) aneinander angrenzen.

4. Gassack-Seitenaufprall-Schutzeinrichtung nach Anspruch 3, **dadurch gekennzeichnet, daß** die Gassäcke 12, 14 miteinander durch einen Ausgleichskanal (13) in Verbindung stehen.

5. Gassack-Seitenaufprall-Schutzeinrichtung nach Anspruch 4, **dadurch gekennzeichnet, daß** der Ausgleichskanal (13) durch eine Nahtlinie (17) gebildet ist, durch welche auch die Gassäcke (12, 14) voneinander abgegrenzt sind.

6. Gassack-Seitenaufprall-Schutzeinrichtung nach einem der Ansprüche 2 bis 5, **dadurch gekennzeichnet, daß** beide Gassäcke (12, 14) über den Innenraum eines Gehäuses (10), in den das Druckgas der Druckgasquelle (16) ausströmt, miteinander in Strömungsverbindung stehen.

7. Gassack-Seitenaufprall-Schutzeinrichtung nach einem der Ansprüche 2 bis 6, **dadurch gekennzeichnet, daß** an dem Gehäuse (10) je eine Anschlußöffnung (28, 30) für die beiden Gassäcke (12, 14) ausgebildet ist.

8. Gassack-Seitenaufprall-Schutzeinrichtung nach Anspruch 7, **dadurch gekennzeichnet, daß** die Anschlußöffnung (28) für den Kopfschutz-Gassack (12) in einer schräg zur Längsachse der Rückenlehne (47) verlaufenden Ebene liegt.

9. Gassack-Seitenaufprall-Schutzeinrichtung nach einem der Ansprüche 2 bis 8, **dadurch gekennzeichnet, daß** der Thoraxschutz-Gassack (14) und der Kopfschutz-Gassack (12) durch dieselbe Druckgasquelle (16) aufblasbar sind.

10. Gassack-Seitenaufprall-Schutzeinrichtung nach Anspruch 1, **dadurch gekennzeichnet, daß** die beiden Gassäcke (12, 14) einstückig miteinander ausgebildet sind.

11. Gassack-Seitenaufprall-Schutzeinrichtung nach Anspruch 10, **dadurch gekennzeichnet, daß** der Kopfschutz-Gassack (12) mit der Druckgasquelle (16) über den Thoraxschutz-Gassack (14) in Verbindung steht.

12. Gassack-Seitenaufprall-Schutzeinrichtung nach Anspruch 11, **dadurch gekennzeichnet, daß** zwischen den beiden Gassäcken (12, 14) eine Trennwand (50) vorgesehen ist, die mit wenigstens einer Öffnung (52) versehen ist, um eine Strömungsverbindung zwischen den beiden Gassäcken bereitzustellen.

13. Gassack-Seitenaufprall-Schutzeinrichtung nach einem der vorhergehenden Ansprüche, **dadurch gekennzeichnet, daß** der Thoraxschutz-Gassack (14) seinen vollständig entfalteten Zustand früher als der Kopfschutz-Gassack (12) erreicht.

14. Gassack-Seitenaufprall-Schutzeinrichtung nach einem der vorhergehenden Ansprüche, **dadurch gekennzeichnet, daß** der Thoraxschutz-Gassack (14) und der Kopfschutz-Gassack (12) mit der Druckgasquelle (16) in dem gemeinsamen Gehäuse (10) zu einem Modul zusammengefaßt sind.

15. Gassack-Seitenaufprall-Schutzeinrichtung nach Anspruch 14, **dadurch gekennzeichnet, daß** das Gehäuse (10) aus zwei aneinandergefügten Gehäuseschalen (18, 20) besteht.

16. Gassack-Seitenaufprall-Schutzeinrichtung nach Anspruch 14, **dadurch gekennzeichnet, daß** das Gehäuse (10) einen Befestigungsstreifen (60) zum Befestigen des Thoraxschutz-Gassackes (14) sowie mehrere Halteabschnitte (62) aufweist, die mit dem Befestigungsstreifen verbunden sind und an der Druckgasquelle (16) angreifen.

17. Gassack-Seitenaufprall-Schutzeinrichtung nach Anspruch 15 oder Anspruch 16, **dadurch gekennzeichnet, daß** das Gehäuse (10) mittels separater Befestigungslaschen (42) am Rahmen (48) der Rückenlehne (47) befestigbar ist.

18. Gassack-Seitenaufprall-Schutzeinrichtung nach Anspruch 15 oder Anspruch 16, **dadurch gekennzeichnet, daß** das Gehäuse (10) mit einstückig angeformten Befestigungslaschen (42) zur Befestigung des Gehäuses (10) am Rahmen (48) der Rückenlehne (47) des Fahrzeugsitzes versehen ist.

19. Gassack-Seitenaufprall-Schutzeinrichtung nach einem der vorhergehenden Ansprüche, **dadurch gekennzeichnet, daß** der Kopfschutz-Gassack (12) und der Thoraxschutz-Gassack (14) so zusammengefaltet sind, daß ein Teil des Kopfschutz-Gassackes (12) den Thoraxschutz-Gassack (14) teilweise überlappend außen auf dessen von der Druckgasquelle (16) abgewandten Seite zu liegen kommt.

20. Gassack-Seitenaufprall-Schutzeinrichtung nach einem der Ansprüche 1 bis 18, **dadurch gekennzeichnet, daß** der Kopfschutz-Gassack (12) in den Thoraxschutz-Gassack (14) hineingefaltet ist.

21. Gassack-Seitenaufprall-Schutzeinrichtung nach einem der vorhergehenden Ansprüche, **dadurch gekennzeichnet, daß** die Gassäcke (12, 14) durch eine Schutzabdeckung (40) in ihrer zusammengefalteten Form gehalten werden, welche die beiden Gassäcke (12, 14) gemeinsam abdeckt.

22. Gassack-Seitenaufprall-Schutzeinrichtung nach Anspruch 21, **dadurch gekennzeichnet, daß** die Schutzabdeckung (40) mit einer Aufreißlinie versehen ist, die entlang der Längsachse der Rückenlehne (47) ausgerichtet ist.

23. Gassack-Seitenaufprall-Schutzeinrichtung nach einem der vorhergehenden Ansprüche, **dadurch gekennzeichnet, daß** im Inneren des Thoraxschutz-Gassackes (14) ein Gewebeteil (54) angeordnet ist, um einen von der Druckgasquelle (16) freigesetzten Druckgasstrom nach oben zum Kopfschutz-Gassack (12) zu leiten.

24. Gassack-Seitenaufprall-Schutzeinrichtung nach einem der vorhergehenden Ansprüche, **dadurch gekennzeichnet, daß** der Thoraxschutz-Gassack (14) mit einer Raffnaht (56) versehen ist.

25. Gassack-Seitenaufprall-Schutzeinrichtung nach einem der vorhergehenden Ansprüche, **dadurch gekennzeichnet, daß** der Thoraxschutz-Gassack (14) mit der Rückenlehne des Fahrzeugs über eine Befestigungsstelle (58) verbunden ist, die oberhalb der Einblasöffnung des Thoraxschutz-Gassackes (14) angeordnet ist.

## Claims

1. A gas bag side impact protective device for vehicle occupants, which is integrated in the backrest (47) of a vehicle seat and comprises a compressed gas source (16) as well as a thorax protecting gas bag (14) which is adapted to be inflated by same and during inflation deploys in a space to the side of the backrest (47), an additional head protecting gas bag (12) being provided, **characterized in that** during inflation the head protecting gas bag (12) deploys above the thorax protecting gas bag (14) and mainly upwards so that it can lift a safety belt.

2. The gas bag side impact protective device according to claim 1, **characterized in that** the two gas bags (12, 14) are independent from each other.

3. The gas bag side impact protective device according to claim 1, **characterized in that** the two gas bags (12, 14) adjoin each other.

4. The gas bag side impact protective device according to claim 3, **characterized in that** the gas bags (12, 14) communicate with each other by an equalization duct (13).

5. The gas bag side impact protective device according to claim 4, **characterized in that** the equalization duct (13) is formed by a seam line (17) which also delimits the gas bags (12, 14) from each other.

6. The gas bag side impact protective device according to any of the claims 2 to 5, **characterized in that** both gas bags (12, 14) are in fluid communication with each other via the interior space of a housing (10) into which the compressed gas flows from the compressed gas source (16).

7. The gas bag side impact protective device according to any of the claims 2 to 6, **characterized in that** formed on the housing (10) is one connection opening (28, 30) for each of the two gas bags (12, 14).

8. The gas bag side impact protective device according to claim 7, **characterized in that** the connection opening (28) for the head protecting gas bag (12) extends in a plane running obliquely to the longitudinal axis of the backrest (47).

9. The gas bag side impact protective device according to any of the claims 2 to 8, **characterized in that** the thorax protecting gas bag (14) and the head protecting gas bag (12) are adapted to be inflated by the same compressed gas source (16).

10. The gas bag side impact protective device according to claim 1, **characterized in that** the two gas bags (12, 14) are formed integrally with each other.

11. The gas bag side impact protective device according to claim 10, **characterized in that** the head protecting gas bag (12) communicates with the compressed gas source (16) via the thorax protecting gas bag (14).

12. The gas bag side impact protective device according to claim 11, **characterized in that** a separation wall (50) is provided between the two gas bags (12, 14), which is provided with at least one opening (52) in order to provide a fluid communication between the two gas bags.

13. The gas bag side impact protective device according to any of the preceding claims, **characterized in that** the thorax protecting gas bag (14) reaches its fully deployed condition earlier than the head protecting gas bag (12).

14. The gas bag side impact protective device according to any of the preceding claims, **characterized in that** the thorax protecting gas bag (14) and the head protecting gas bag (12) together with the compressed gas source (16) are combined in the common housing (10) to form a module.

15. The gas bag side impact protective device according to claim 14, **characterized in that** the housing (10) consists of two housing shells (18, 20) joined to each other.

16. The gas bag side impact protective device according to claim 14, **characterized in that** the housing (10) comprises a mounting strip (60) for attaching the thorax protecting gas bag (14) as well as several holding sections (62) connected to the mounting strip and engaging the compressed gas source (16).

17. The gas bag side impact protective device according to claim 15 or claim 16, **characterized in that** the housing (10) is adapted to be attached by means of separate attachment lugs (42) to the frame (48) of the backrest (47).

18. The gas bag side impact protective device according to claim 15 or claim 16, **characterized in that** the housing (10) is provided with integrally formed attachment lugs (42), for attaching the housing (10) to the frame (48) of the backrest (47) of the vehicle seat.

19. The gas bag side impact protective device according to any of the preceding claims, **characterized in that** the head protecting gas bag (12) and the thorax protecting gas bag (14) are folded up such that a part of the head protecting gas bag (12), while partially overlapping the thorax protecting gas bag (14), assumes an outside position on the side of the same facing away from the compressed gas source (16).

20. The gas bag side impact protective device according to any of the claims 1 to 18, **characterized in that** the head protecting gas bag (12) has been folded into the thorax protecting gas bag (14).

21. The gas bag side impact protective device according to any of the preceding claims, **characterized in that** the gas bags (12, 14) are held in their folded form by a protective cover (40) which jointly covers the two gas bags (12, 14).

22. The gas bag side impact protective device according to claim 21, **characterized in that** the protective cover (40) is provided with a tear-open line aligned to extend along the longitudinal axis of the backrest (47).

23. The gas bag side impact protective device according to any of the preceding claims, **characterized in that** a fabric piece (54) is arranged inside the thorax protecting gas bag (14) in order to direct a flow of compressed gas released by the compressed gas source (16) upwardly towards the head protecting gas bag (12).

24. The gas bag side impact protective device according to any of the preceding claims, **characterized in that** the thorax protecting gas bag (14) is provided with a gathering seam (56).

25. The gas bag side impact protective device according to any of the preceding claims, **characterized in that** the thorax protecting gas bag (14) is connected to the backrest of the vehicle via an attachment point (58) located above the inflation opening of the thorax protecting gas bag (14).

## Revendications

1. Dispositif de protection par coussin à gaz contre les chocs latéraux, qui est intégré dans le dossier (47) d'un siège de véhicule et présente une source de gaz sous pression (16) ainsi qu'un coussin à gaz de protection du thorax (14) qui peut être gonflé par celle-ci et qui, en se gonflant, se déploie dans un espacé situé latéralement au dossier (47), un coussin à gaz supplémentaire de protection de la tête (12) étant prévu, **caractérisé en ce que**, en se gonflant, le coussin à gaz de protection de la tête (12) se déploie au-dessus du coussin à gaz de protection du thorax (14) et principalement vers le haut, de sorte qu'il peut soulever une ceinture de sécurité.

2. Dispositif de protection par coussin à gaz contre les chocs latéraux selon la revendication 1, **caractérisé en ce que** les deux coussins à gaz (12, 14) sont indépendants l'un de l'autre.

3. Dispositif de protection par coussin à gaz contre les chocs latéraux selon la revendication 1, **caractérisé en ce que** les deux coussins à gaz (12, 14) sont contigus l'un à l'autre.

4. Dispositif de protection par coussin à gaz contre les chocs latéraux selon la revendication 3, **caractérisé en ce que** les deux coussins à gaz (12, 14) communiquent entre eux par un canal de compensation (13).

5. Dispositif de protection par coussin à gaz contre les chocs latéraux selon la revendication 4, **caractérisé en ce que** le canal de compensation (13) est formé par une couture (17) qui délimite également les coussins à gaz (12, 14) l'un par rapport à l'autre.

6. Dispositif de protection par coussin à gaz contre les chocs latéraux selon l'une quelconque des revendications 2 à 5, **caractérisé en ce que** les deux coussins à gaz (12, 14) sont en communication fluidique l'un avec l'autre par l'intermédiaire de la chambre intérieure d'un boîtier (10), dans laquelle s'échappe le gaz sous pression de la source de gaz sous pression (16).

7. Dispositif de protection par coussin à gaz contre les chocs latéraux selon l'une quelconque des revendications 2 à 6, **caractérisé en ce que** le boîtier (10) est pourvu d'un orifice de raccordement (28, 30) pour les deux coussins à gaz (12, 14).

8. Dispositif de protection par coussin à gaz contre les chocs latéraux selon la revendication 7, **caractérisé en ce que** l'orifice de raccordement (28) pour le coussin à gaz de protection (12) se trouve dans un plan incliné par rapport à l'axe longitudinal du dossier (47).

9. Dispositif de protection par coussin à gaz contre les chocs latéraux selon l'une quelconque des revendications 2 à 8, **caractérisé en ce que** le coussin à gaz de protection du thorax (14) et le coussin à gaz de protection de la tête (12) sont gonflés par la même source de gaz sous pression (16).

10. Dispositif de protection par coussin à gaz contre les chocs latéraux selon la revendication 1, **caractérisé en ce que** les deux coussins à gaz (12, 14) sont réalisés d'un seul tenant l'un avec l'autre.

11. Dispositif de protection par coussin à gaz contre les chocs latéraux selon la revendication 10, **caractérisé en ce que** le coussin à gaz de protection de la tête (12) est relié à la source de gaz sous pression (16) par l'intermédiaire du coussin à gaz de protection du thorax (14).

12. Dispositif de protection par coussin à gaz contre les chocs latéraux selon la revendication 11, **caractérisé en ce que**, entre les deux coussins à gaz (12, 14) est prévue une cloison (50) qui est pourvue d'au moins une ouverture (52) pour créer une communication fluidique entre les deux coussins à gaz.

13. Dispositif de protection par coussin à gaz contre les chocs latéraux selon l'une quelconque des revendications précédentes, **caractérisé en ce que** le coussin à gaz de protection du thorax (14) atteint son état de déploiement complet plus tôt que le coussin à gaz de protection de la tête (12).

14. Dispositif de protection par coussin à gaz contre les chocs latéraux selon l'une quelconque des revendications précédentes, **caractérisé en ce que** le coussin à gaz de protection du thorax (14) et le coussin à gaz de protection de la tête (12) sont réunis, avec la source de gaz sous pression (16), sous la forme d'un module dans le boîtier (10) commun.

15. Dispositif de protection par coussin à gaz contre les chocs latéraux selon la revendication 14, **caractérisé en ce que** le boîtier (10) se compose de deux coques de boîtier (18, 20) accolées.

16. Dispositif de protection par coussin à gaz contre les chocs latéraux selon la revendication 14, **caractérisé en ce que** le boîtier (10) présente une bande de fixation (60) pour fixer le coussin à gaz de protection du thorax (14) ainsi que plusieurs portions de retenue (62) qui sont reliées à la bande de fixation et appliquées contre la source de gaz sous pression (16).

17. Dispositif de protection par coussin à gaz contre les chocs latéraux selon la revendication 15 ou 16, **caractérisé en ce que** le boîtier (10) est fixé à la carcasse (48) du dossier (47) au moyen de pattes de fixation séparées (42).

18. Dispositif de protection par coussin à gaz contre les chocs latéraux selon la revendication 15 ou 16, **caractérisé en ce que** le boîtier (10) est muni de pattes de fixation (42) moulées d'un seul tenant pour fixer le boîtier (10) à la carcasse (48) du dossier (47) du siège de véhicule.

19. Dispositif de protection par coussin à gaz contre les chocs latéraux selon l'une quelconque des revendications précédentes, **caractérisé en ce que** le coussin à gaz de protection de la tête (12) et le coussin à gaz de protection du thorax (14) sont pliés de façon qu'une partie du coussin à gaz de protection de la tête (12) vient se placer, en recouvrant partiellement le coussin à gaz de protection du thorax (14), à l'extérieur sur le côté de celui-ci situé à l'opposé de la source de gaz sous pression (16).

20. Dispositif de protection par coussin à gaz contre les chocs latéraux selon l'une quelconque des revendications 1 à 18, **caractérisé en ce que** le coussin à gaz de protection de la tête (12) est plié à l'intérieur du coussin à gaz de protection du thorax (14).

21. Dispositif de protection par coussin à gaz contre les chocs latéraux selon l'une quelconque des revendications précédentes, **caractérisé en ce que** les coussins à gaz (12, 14) sont maintenus dans leur forme repliée par un cache protecteur (40) qui recouvre conjointement les deux coussins à gaz (12, 14).

22. Dispositif de protection par coussin à gaz contre les chocs latéraux selon la revendication 21, **caractérisé en ce que** le cache protecteur (40) est pourvu d'une ligne de déchirement qui s'étend dans le sens de l'axe longitudinal du dossier (47).

23. Dispositif de protection par coussin à gaz contre les chocs latéraux selon l'une quelconque des revendications précédentes, **caractérisé en ce qu'**à l'intérieur du coussin à gaz de protection du thorax (14) est disposée une pièce de tissu (54) pour diriger le courant de gaz sous pression libéré par la source de gaz sous pression (16), vers le haut en direction du coussin à gaz de protection de la tête (12).

24. Dispositif de protection par coussin à gaz contre les chocs latéraux selon l'une quelconque des revendications précédentes, **caractérisé en ce que** le coussin à gaz de protection du thorax (14) est pourvu d'une couture de fronçage (56).

25. Dispositif de protection par coussin à gaz contre les chocs latéraux selon l'une quelconque des revendications précédentes, **caractérisé en ce que** le coussin à gaz de protection du thorax (14) est relié au dossier du véhicule par un point de fixation (58) situé au-dessus de l'orifice de gonflage du coussin à gaz de protection du thorax (14).
